# EUROPEAN PATENT SPECIFICATION

(11) **EP 3 482 233 B1**
(45) Date of publication and mention of the grant of the patent: **06.01.2021**
(21) Application number: 17745655.5
(22) Date of filing: 07.07.2017
(51) Int. Cl.: G01V 3/10, F41H 11/136

(54) **METHOD AND SYSTEM FOR ELECTROMAGNETIC DETECTION AND INSPECTION OF AN AREA FOR METALLIC INTERFERENCE MASSES**
VERFAHREN UND SYSTEM ZUM ELEKTROMAGNETISCHEN ERFASSEN UND PRÜFEN EINES BEREICHS FÜR METALLISCHE INTERFERENZMASSEN
PROCÉDÉ ET SYSTÈME DE DÉTECTION ET D'INSPECTION ÉLECTROMAGNÉTIQUES D'UNE ZONE POUR LA RECHERCHE DE MASSES D'INTERFÉRENCE MÉTALLIQUES

(30) Priority: 07.07.2016 DE 102016112524
(43) Date of publication of application: 15.05.2019
(73) Proprietor: Heinrich Hirdes GmbH, 21079 Hamburg (DE)
(72) Inventor: KOELBEL, Jan, 21079 Hamburg (DE)
(74) Representative: Schmidt, Axel
(86) International application number: PCT/EP2017/067179
(87) International publication number: WO 2018/007640

(56) References cited:
- WO-A1-2014/159126
- WO-A1-2016/076733
- US-A1- 2003 034 778
- US-A1- 2005 110 496
- US-A1- 2009 302 850
- US-A1- 2013 300 401
- US-A1- 2015 204 821
- PHILLIPS DOUG ET AL: "Taut Wire", DYNAMIC POSITIONING CONFERENCE, 14 October 2014 (2014-10-14), pages 1-16, XP055412016,
- GAPEOD: "Gap EOD Explosive Ordnance Detection", INTERNET CITATION, 1 January 2015 (2015-01-01), pages 1-2, XP002772796, Retrieved from the Internet: URL:http://www.gapgeo.com/media/18166/eod- uxo-deep-bombs_v2.pdf [retrieved on 2017-08-04]

## Description

The present invention relates to a method and a system for electromagnetic detection and inspection of an area for metallic interference masses that lie concealed under a ground surface, in particular for detecting unexploded ordnance.

Various approaches are known from the prior art for detecting electrically conductive objects that lie concealed under a ground surface. In this connection, methods and devices for detecting unexploded ordnance constitute application fields of particularly high importance. In the context of the present invention, unexploded ordnance is understood to primarily include duds and fractured bombs or so-called partially detonated explosive shells, mines, and aerial bombs or torpedoes; all of the above-mentioned groups can pose considerable risks to people and the environment even after many decades.

Among other things, approaches for electromagnetically exciting an interference mass, which appears as an electromagnetic anomaly, by inducing electromagnetic pulses have proven useful as means for locating metallic objects in the ground and along with them, even non-ferromagnetic objects, since these approaches are superior in essential points to a purely magnetic probing. In unexploded ordnance detection of this kind, electromagnetic pulses are transmitted into the ground by means of an excitation coil in an exact area that is generally determined by means of geo-coordinates. A receiver unit on the ground surface then measures an electromagnetic pulse response following this excitation, which pulse is emitted due to eddy currents in metallic objects of the interference mass in reaction to an electromagnetic excitation pulse. These response signals are to be evaluated afterwards in generally known manner. This type of inspection can discover anomalies and potentially hazardous locations based on a search performed at the surface.

Active methods that use an electromagnetic excitation by means of a conductor loop or an excitation coil, through which a pulsed current flows, for excitation of hidden metallic objects and receiving sensors, have gained acceptance due to their sensitivity and greater range as compared to systems that function in a purely passive fashion. In addition to portable systems of the kind that are known, among other things, from EP 0 780 705 B1, mobile or manually slidable systems with different sensor arrangements are also known, for example, from DE 20 2012 008 435 U1, DE 20 2015 102 891 U1, DE 20 2012 007 159 U1, and DE 20 2015 103 371 U1; there are even systems that are equipped with different arrangements of sensors and hover on an air cushion, as disclosed in DE 297 01 232 U1. Whereas the former devices have a working width that is too small for an effective use in larger areas, the latter device, while having only a slightly greater working width, is distinguished by an enormously greater technical complexity.

WO 2014/159126 A1 discloses an active measurement system using more than one excitation coil and more than one 3D-receiver. Said excitation coils and said 3D-receivers are fixed within a portable system.

US2009/0302850 A1 discloses a system comprising just one transmission coil, one 3D-receiver and a positioning system. Said elements form a unit movable over the ground.

US 2015/0204821 A1 discloses an ultrasonic inspection system guided on subsea tubular items, like e.g. a pipeline. Again, a movable unit is provided.

US 2013/300401 A1 discloses a hand held device made of at least an outer coil and an inner coil, where transmission coils do not overlap. The concept is to make the magnetic field caused by the outer coil disappear at the inner coil acting as magnetic field sensor unless there is an object near-by.

The non-patent literature internet citation of 1 January 2015 published by GAPEOD "Gap EOD Explosive Ordnance Detection", discloses the use of a single and very large excitation coil and the use of one to fifteen three-component receiver coils being moved within the excitation coil for recording.

US 2002/0163346 A1 discloses a method using a reference transfer function between transmitter coils and receiver coils arranged in an overlapping fashion. Any deviation of said reference transfer function due to the presence of electrically conductive material is calculated from data measured at a certain spot.

The object of the present invention is to create a method and system with movable excitation loops and receivers with a significantly enlarged working width while essentially maintaining a constant predetermined small distance from a ground surface, consequently enabling reliable, economical, and thus more effective work.

This object is attained according to the invention by the features of claim 1 by means of a method for electromagnetic detecting, inspection and characterization of a metallic interference mass that lies concealed under a ground surface and in particular for detecting unexploded ordnance by means of disposing the carriage over the ground surface the carriage supporting the excitation coils situated in at least partially overlapping fashion in the x-y plane of a Cartesian coordinate system and where one component of each of the 3D receivers is situated in the x-y plane of the excitation coils, the carriage also supporting the 3D receivers distributed uniformly at least across their area and/or even partially beyond an area covered by the excitation coils, while moving the carriage in a single pass over an area to be evaluated triggering the excitation coils serially and all of the 3D receivers recording a decay behaviour of pulse responses of all of the 3D receivers in all three spatial axes x, y, z of said Cartesian coordinate system and using the recordings and the geo-coordinates of the respective position of all of the 3D receivers to detect, evaluate and characterize to enhance the results of this single pass method for detection, evaluation and characterization of a the metallic interference mass that lies in an the area to be evaluated while moving the carriage. In this connection, these 3D receivers, which are distributed in the plane of the excitation coils and sensors, uniformly across their area and/or even partially beyond an area covered by at least one excitation coil, are used to carry out a process of electromagnetic pulse induction. As a result, it is possible to carry out very effective measurement across an area of the carriage while maintaining an essentially constant predetermined small distance of the excitation coils and 3D receivers from a ground surface during use. The distance in this connection protects the excitation coils and 3D receivers from damage.

Advantageous modifications are the subject of the respective dependent claims. In the invention, the excitation coils are arranged in an at least partially overlapping fashion. That means, that neighbouring excitation coils show less than 100% and more than 0% overlap. This arrangement is used to cause a well-defined small shift of excitation within a small period of time. This increases the volume of data available to enhance the results of a single pass method for detection, evaluation and characterization of a metallic interference mass that lies in an area to be evaluated and/or mapped using a method according to the present invention.

The carriage is thus used as a mechanical unit and according to a particularly advantageous modification of the invention, can also support - together as a unit - means for powering and triggering the excitation coils and means for processing the signals from the 3D receivers. The increase in the weight of the carriage used that this also entails will be discussed in greater detail below with reference to exemplary embodiments. By forming a unit, the excitation coils and the 3D receivers have a predetermined arrangement and are fixed relative to one another. Subsequently, this knowledge of the respective positions also enables an exact allocation of a respective measurement signal of a sensor to exactly one respective geo-coordinate.

In a particularly advantageous modification of the invention, the support is embodied as a carriage composed of segments like a pin- and plug connection composed of individual elements. Even with outer dimensions of a preferred embodiment of almost 7 m in working width and approximately 9 m in overall length, these individual elements are embodied so that in the disassembled state, they can be loaded in a container, transported, and set up or assembled on site for use. In this connection, further details will be explained below with reference to an exemplary embodiment in conjunction with the drawings.

In a particularly preferred modification of the invention, in addition to the traction equipment on the support, positioning means are also used in order to be able to perform direct satellite-assisted positioning when there is sufficient line of sight and to perform an indirect positioning particularly by means of a so-called "taut wire" when there is not sufficient line of sight. Preferably, as a supplement to this dynamic positioning by means of a taut-wire system, an inclinometer, gyrometer, and altimeter are provided at or on the carriage in order to be able to directly and immediately indicate a respective position, inclination, and orientation of the device in space with a high degree of precision, even without direct satellite positioning.

In general, there are two different ways of using a carriage as characterized above: either the carriage is used in a wing-like fashion having a well-defined distance Δh over the ground surface, or the carriage is used touching the ground surface in a more or less constant manner. It is known state of the art to supply for a well-defined distance Δh over the ground surface using a system of controlled winches. For the alternative, the distance Δh over the ground surface is set to zero. However, constant and un-interrupted contact to the ground surface cannot be guaranteed at any time resulting in that a more or less constant contact to the ground surface is regarded to be sufficient for reliable results of a method according to the present invention.

A generally constant contact of a drawn carriage with a ground surface, no matter what the quality of the ground surfaces, basically always shows up over time in the form of wear phenomena. In order to prevent a weakening of the mechanical structure of the carriage and also to always reliably fix and protect the excitation coils and the multitude of 3D receivers, a sacrificial plate is used in at least one contact region of the carriage with the ground surface. Such sacrificial plates are preferably mounted in replaceable fashion by being suspended and/or snapped in place in a movement direction of the carriage and are likewise embodied as electrically nonconductive elements. The sacrificial plates are preferably replaced at intervals. A contact region of the carriage with the ground surface encompasses almost the entire ground region of the carriage or even other parts beyond it that are subject to stress during use. Consequently, essentially the entire ground region of the carriage is covered with sacrificial plates. An accompanying distribution of weight to a larger support- or contact surface, however, results in the fact that an area loading under the carriage is reduced on the whole. This can be advantageous, particularly with very soft soils. As an embodiment that attains the object stated above, a system for electromagnetic inspection of a metallic interference mass Z according to claim 9 is also proposed; in one embodiment of the invention, in a front region, electronics are provided for power supply purposes, data acquisition, or data processing and in a rear region, excitation coils and 3D sensors are provided. A device of this kind has a basically sufficient structural stability and can be adapted to requirements under water as well as on land through the integration of corresponding weights. The spatial separation of the electronics from the transmission coils and receiving sensors also prevents electromagnetic malfunctions as much as possible.

In a preferred embodiment of the invention, the frame of the carriage ends in skids. The skids are oriented parallel to a movement direction. In addition, a contact region of the carriage with the ground surface has replaceable sacrificial plates.

For a use under water, in one embodiment of the invention, an above-described device is embodied particularly so that the carriage is connected via an electrically nonconductive tensile connection to a leader weight, which is in turn connected to a towing vehicle in order to impart a tensile force. Holding- and traction equipment of this kind can be composed of nylon ropes or heavy-duty belts. In particular, a ship or tugboat is used as a towing vehicle.

In one embodiment of the invention, at least one hatch is placed over the front region of the carriage to protect the electronics and/or over the rear region to protect the excitation coils and 3D sensors. This cover provides protection from accretions or deposits of sediment or even rocks during the operation on the ground surface. The cover preferably also has cooling means with a removal of electrically generated dissipated heat from the above-mentioned components.

Consequently, an above-described device can be universally used as a whole system for being drawn over the surface of the ground under water in the sea, in a lake, or even in shallow water zones. Because of its design, the device, when viewed from the side, has a flow resistance at the top that can even permit it to be used in a surf zone. But even on land, e.g. on a beach, in a marsh or wetland, or in some other area with low vegetation and/or few obstacles, an above-described system can be drawn with a carriage by means of adapted traction equipment and maintains a predetermined distance interval from a respective ground surface.

In only one pass, by precisely indicating geo-coordinates of a respective position of all sensors in addition to an overall exploration for anomalies that occur, it is thus also possible to immediately complete the step of reliably characterizing each anomaly, distinguishing it as a military object, civilian scrap, or a possible archaeological discovery. The measurement of response signals and/or their decay behaviour in the individual spatial axes offers the advantage of a more sensitive detection of the decay behaviour of the response signal, i.e. a detection of a chronological change in the field. This enables an improved possibility for characterization with regard to a respective interference mass to be inspected. The simultaneous use of a multitude of sensors results in a reliable assessment of a respective discovery situation in the course of characterizing an anomaly in a precisely determined location. As a result, no repeat measurements are required, which might otherwise even have to be carried out using other instruments, as is still common practice in known methods. Due to the precisely known geo-data, an anomaly or metallic interference mass detected in this way can always be found again immediately under any circumstances, particularly also under water and in poor visibility conditions, in order to then be able, in a next step, to selectively carry out a salvage or defusing operation.

Other features and advantages of embodiments according to the invention will be described in greater detail below with reference to exemplary embodiments in conjunction with the drawings. In the schematically depicted drawings:
- Figs. 1a and 1b:: show a first exemplary embodiment of a carriage in a top view and side view;
- Figs. 2a and 2b:: show a second exemplary embodiment of a carriage with transmission coils and 3D sensors and electronics in a top view and side view;
- Figs. 3a and 3b:: show a third exemplary embodiment of a carriage on a tug-boat as a towing vehicle, in a transport position and in a use position on the ground;
- Figs. 4a through 4d:: show a fourth exemplary embodiment of a carriage, in a three-dimensional view with transmission coils and 3D sensors and in a top view, side view, and front view;
- Figs. 5a through 5f:: show top views and side views of details of the fourth exemplary embodiment,
- Figs. 6a and 6b:: show a top view and side view of the fourth exemplary embodiment of the carriage, which, during use, is drawn by a towing vehicle analogous to the depiction in Fig. 3b, and
- Figs 7a to 7c:: show views of a carriage used in a wing-like fashion at a pre-set height Δh over a ground surface.

Throughout the various drawings, the same reference numerals are consistently used for the same elements or method steps.

Within a model used here, a ground surface is supposed to be a x-y plane and the depth of water is measured in z-direction of a Cartesian coordinate system. The invention will be illustrated and described below in a non-limiting way only in connection with a use for the precise detection of a potentially hazardous location or anomaly, with an inspection of its size, position, and shape under water. It is clear to the person skilled in the art, however, that in the same way, an adaptation can be carried out for other fields of use in which for cost- and/or safety reasons, with regard to the time and cost outlay, excavation work should be avoided. Consequently, not only raw material explorations, but also a positioning of sea cables or pipelines and treasure hunting can be fields of use for embodiments of the invention, without having to discuss them and the specifics of the respective applications in detail below.

A known method for electromagnetic detection and inspection of a metallic interference mass S that lies concealed under a ground surface BO uses a so-called pulse induction approach and will be described below only from the standpoint of unexploded ordnance detection. In this case, an electromagnetic excitation by means of a conductor loop or an excitation coil through which a pulsed current flows is used to excite concealed metallic objects, i.e. a metallic interference mass S. Response signals produced by induction are then recorded by sensors and evaluated.

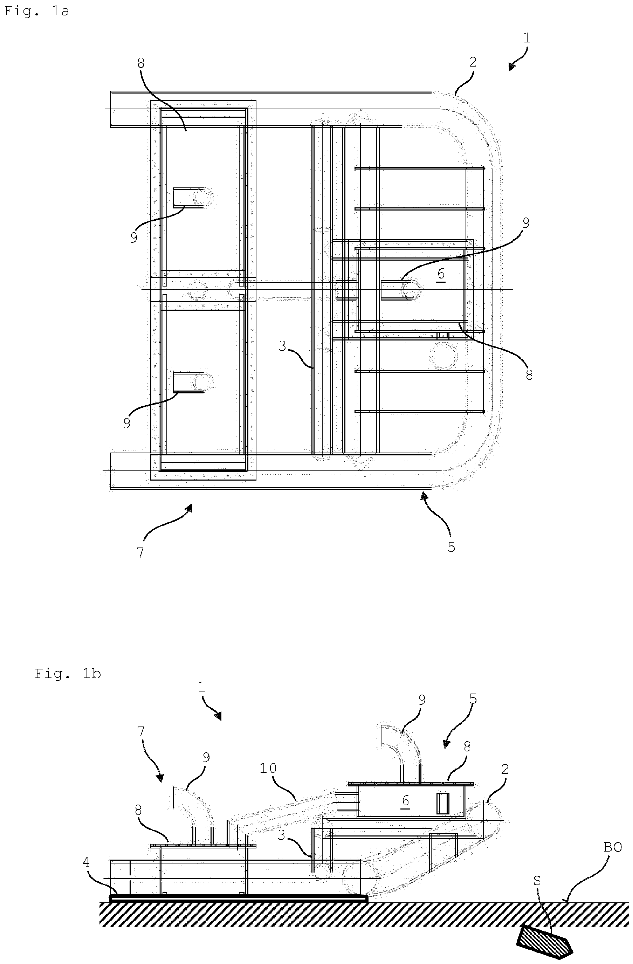

Fig. 1a shows a top view of a first exemplary embodiment of a carriage 1 or sledge. Fig. 1b shows a side view of the carriage 1 of Fig.1a. The carriage 1 is used as a support for excitation coils and receivers that are not shown in detail here. The carriage 1 composed of electrically nonconductive material has a frame 2 that is essentially U-shaped here and has lateral- and reinforcing struts 3. When a weldable plastic is used as the electrically nonconductive material, attention must be paid to its susceptibility to wear, particularly in a contact region in which the carriage 1 contacts the ground surface BO. Here, sacrificial plates 4 are used to protect against wear, which are likewise composed of an electrically nonconductive material.

In a front region 5 of the carriage 1 viewed in the movement direction during use, a set of electronics 6 is provided for powering the excitation coils, for data acquisition, or for data processing of the reception signals from the receivers, and in a rear region 7, excitation coils and the multitude of uniformly distributed 3D sensors are provided. As shown in Fig. 1b, the front region 5 and rear region 7 of the carriage 1 are provided with respective hatches 8 for respectively protecting the electronics 6 and the excitation coils and sensors and/or receivers distributed uniformly across the excitation coils. In this case, these hatches 8 also include pipes 9 or fittings as means for producing the cooling flow past the underlying electrical components in order to remove dissipated heat. Another pipe 10 connects the front region 5 of the carriage 1 to the rear region 7. Electrical lines between the excitation coils and sensors are routed through this pipe 10 to the electronics and protected against rough environmental conditions.

In order to ensure that the carriage 1 sinks rapidly, flooding ports, not shown in detail, are also provided in the carriage 1. The U-shaped frame 2 and/or the lateral- and reinforcing struts 3 are also filled with ballast. To that end, sections of these elements are filled with sand or are cast in concrete in order to accelerate a sinking of the carriage 1 and also in order to prevent a hydroplaning of the carriage 1 as it is subsequently drawn over the ground surface BO. Additional weights can be provided to keep the carriage securely on the ground surface BO as it travels.

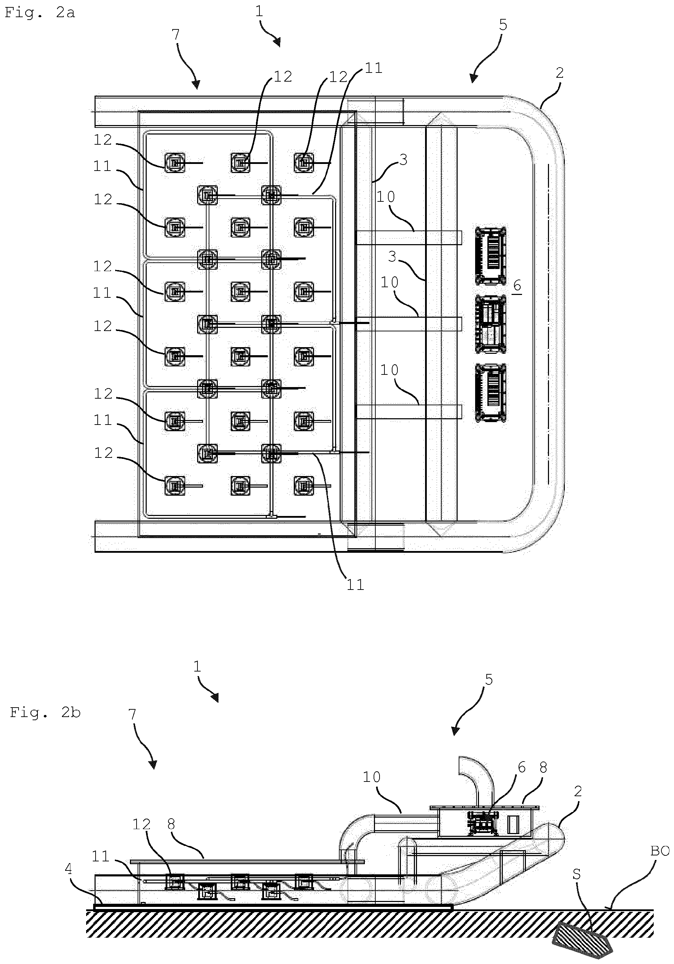

The drawings in Figs. 2a and 2b show a second exemplary embodiment of a carriage 1 in a top view and side view. Now transmission coils 11 and 3D sensors 12 are mounted in the rear region 7 of the carriage 1 and the electronics 6 are mounted in the front region 5. Three pipes 10 functioning as cable conduits connect these regions that are covered by hatches 8 to each other.

In this case, five transmission coils 11 are arranged in two rows, where the coils 11 in each row do not overlap; these rows are arranged so that they partially overlap, e.g. by 50%. In addition, a total of 28 3D sensors 12 in the form of compact spools are distributed as arrays in the x-y plane, along with the transmission coils 11, uniformly across the surface of them and also partially beyond the surface covered by at least one transmission coils 11 used for excitation afterwards. In the course of a measurement, the excitation- or transmission coils 11 are serially triggered with a powerful current pulse by the electronics 6. A magnetic field that is generated by this flow of current when it is quickly shut off induces an electric field in a metallic interference mass S, with eddy currents whose intensity and duration depend on the type, layer thickness, and shape of the interference mass S. The flowing eddy currents in turn also generate a magnetic field with a special three-dimensional spatial shape, which can be measured as the pulse response by the sensors 12 in all three spatial axes in the carriage 1. This basically makes it possible to detect a metallic interference mass S by way of recording and evaluation of these response signals derived from the sensors 12, respectively.

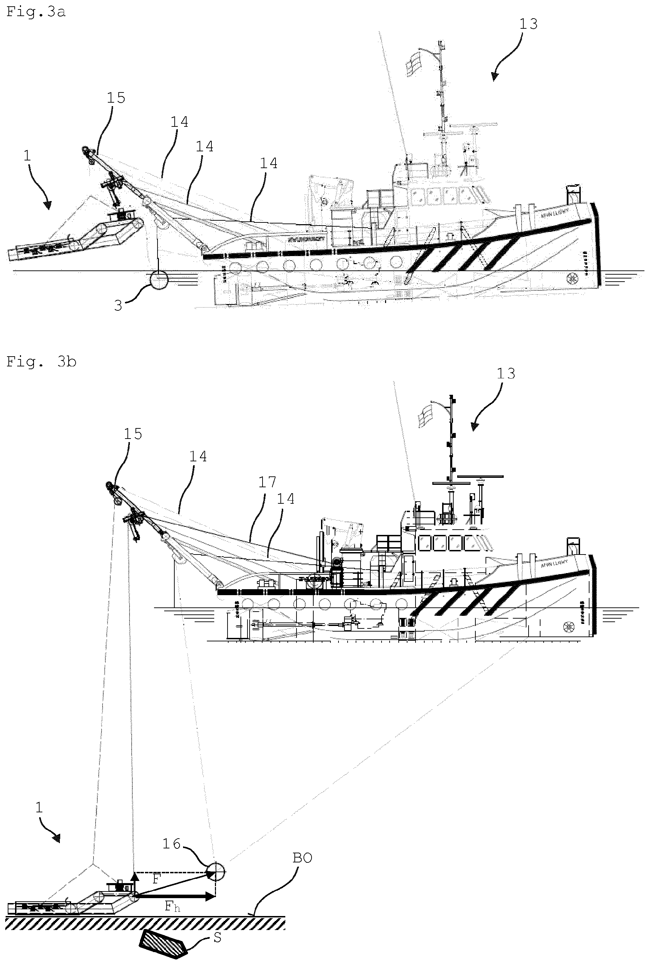

A chronological decay behaviour of components of this pulse response after an abrupt switching-off of a current flow through the transmission coils 11 is recorded by all of the 3D receivers 12 in all three spatial axes x, y, z and then evaluated in the electronics 6. Through a spatial inspection of the 28 x 3 pulse responses, however, it is also possible to draw conclusions regarding the type and size of a metallic interference mass S. A respective span along the spatial axes x, y, z also makes it possible to draw conclusions about symmetry properties of the interference mass S, based on which, with only one measurement procedure, an inspection for more detailed characterization can be carried out, with a basic distinction between ordnance and UXO on one hand side or harmless metal and scrap on the other hand side. In so doing, a geo-coordinate of the interference mass S is known in a basically precise way and is stored together with these measurement and inspection results, as described below with reference to the drawing in Fig. 3b, among other things.

The drawings in Figs. 3a and 3b show a third exemplary embodiment of a carriage 1 on a tugboat 13 being used as a towing vehicle. Fig. 3a shows the carriage 1, which by means of various pieces of traction and holding equipment 14 is attached to a crane jib 15 of the tugboat 13, in a possible transport position. The pieces of traction and holding equipment 14, which for their mechanical task, are composed as much as possible of electrically nonconductive material, also supply the carriage 1 with electrical energy and transmit the measurement signals from the electronics 6 to the tugboat 13.

Fig. 3b shows the above-described system in a use position in which the carriage 1 is underwater, at the bottom, and in contact with a ground surface BO, as it is being pulled by the tugboat 13 via the traction equipment 14 at speeds of approximately 1-2 knots (1 knot = 1.852 km/h). In order to reduce a vertical component of a tensile force and the angle of an introduction of force into the carriage 1 as much as possible, the traction equipment 14 includes a leader weight 16 that has a mass of about 20t and the most streamlined possible form. In this case, the leader weight 16 is provided in the form of a ball or cylindrical pipe with a corresponding filling. By means of the selected geometry, a vertical component is reduced in favour of a horizontal component Fₕ, which significantly reduces the tensile force F acting on the carriage 1 in order to thus significantly reduce the risk of the carriage 1 lifting up from the ground surface BO. Otherwise, a weight of the carriage 1 would probably have to be further increased to a significant degree, which would result in increased friction, increased wear, and even higher tensile forces.

On the carriage 1, in addition to the holding- and traction equipment 14, positioning means are also provided in order to be able to carry out a precise positioning underwater based on indirect methods when there is not sufficient line of sight and satellite-assisted positioning of the carriage 1 is correspondingly lost. For the indirect positioning, the carriage 1 is connected to the towing vehicle 13 by means of a so-called taut wire 17. Such dynamic measurements for position determination relative to a tugboat 13 with GPS positioning as a reference point are known to the person skilled in the art among other things from the laying of sea cables and pipelines. In this case, an inclinometer, gyrometer, and altimeter, which are not shown in detail in the drawing, are also provided at or on the carriage 1 in order to be able to directly and immediately indicate a respective position, inclination, and orientation of the carriage 1 in space with a high degree of precision, even without direct satellite positioning. Consequently, geo-reference points are available for each of the sensors 12 and for each time of the measurement.

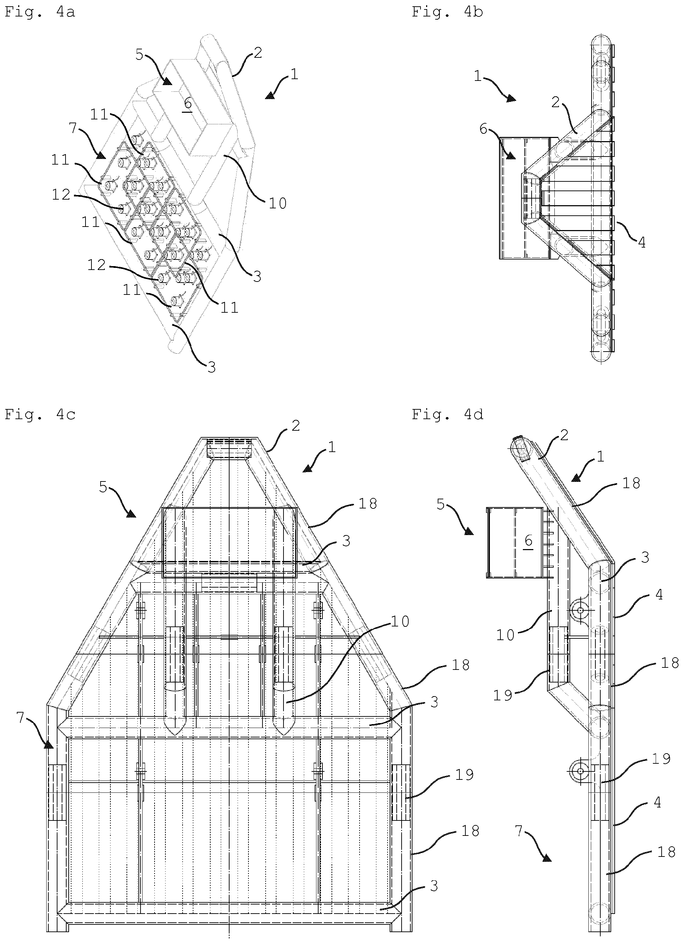

Fig. 4a shows a fourth exemplary embodiment of a carriage 1 in a three-dimensional view with transmission coils 11 and 3D sensors 12. The arrangement of the transmission coils 11 and 3D sensors 12 in the rear region 7 and the electronics 6 in the front region 5 of the carriage 1 corresponds to the greatest possible extent to that of the second exemplary embodiment, see Figs. 2a and 2b. A repeat description has therefore been omitted. In this exemplary embodiment, the frame 2 of the clearly enlarged carriage 1 is embodied as essentially V-shaped. In addition, this carriage 1 is now embodied of individual segments 18, which are detachably connected to one another through the use of pin- and plug connections 19. In this case, the segments 18 are dimensioned as individual elements so that in the disassembled state, they can be loaded into a transport device and advantageously in this case, into a container, transported, and after unloading, can be set up or assembled on site for use by means of the pin- and plug connections 19. In this way, external dimensions of approximately 9 m in length with a working width of about 6.60 m can be achieved.

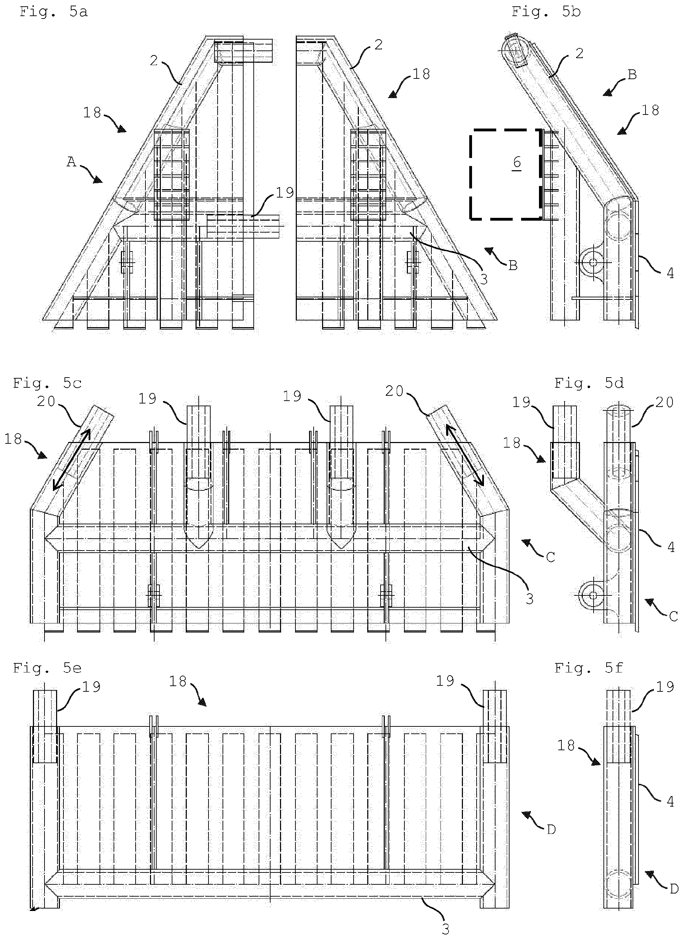

In a top view, side view, and front view of the carriage 1 shown in the drawings in Figs. 4b through 4d, the pin- and plug connections 19 between the - in this case four - segments 18 A, B, C, and D are clearly visible. In addition, Figs. 5a through 5f show top and side views of the segments 18 A, B, C, and D of the fourth exemplary embodiment with the respective pin- and plug connections 19 as individual parts. In this case, two moving pins 20 are identified separately.

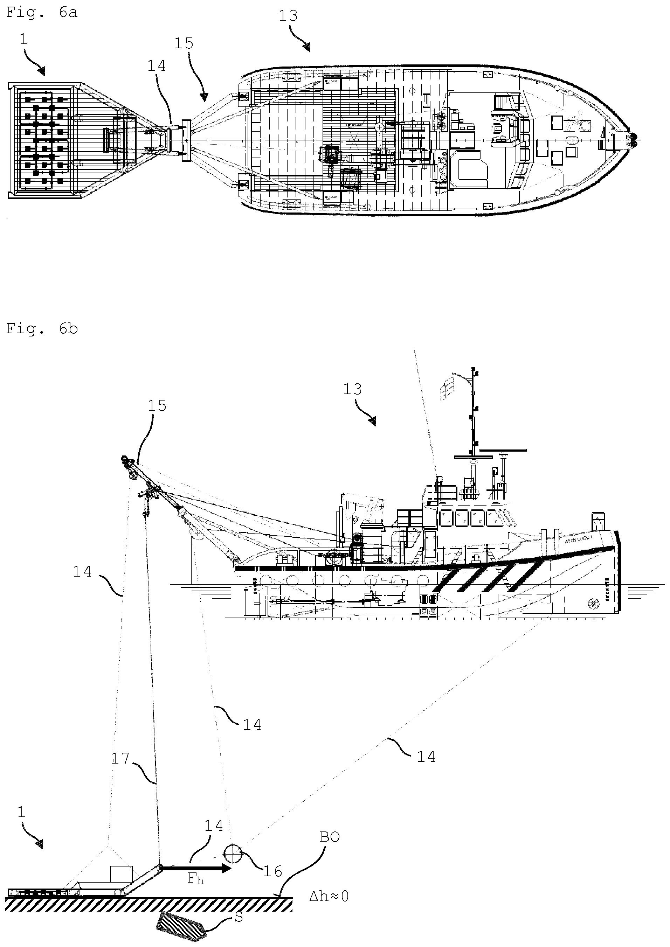

Figs. 6a and 6b show a top view and side view of the fourth exemplary embodiment of the carriage 1 during use, in which the carriage 1 is being drawn over the surface of the ground by a towing vehicle 13 analogous to the depiction in Fig. 3b so that it is in contact with the ground surface BO and is being transported in a passive position.

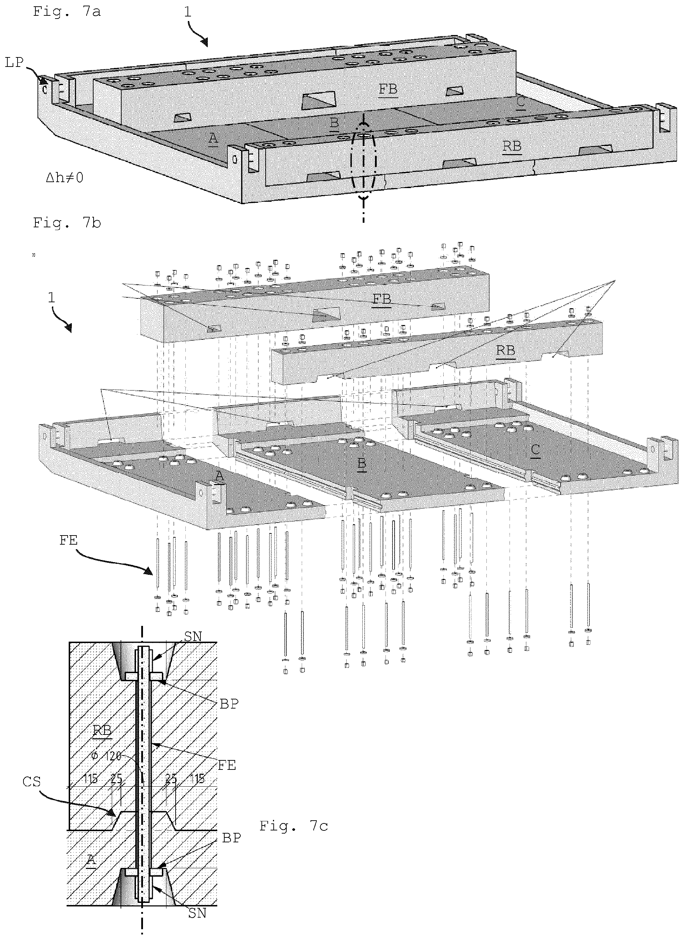

Figs 7a to 7c show views of a carriage 1 used in a wing-like fashion at a pre-set height Δh over a ground surface BO. In contrary to the embodiments of Figs. 1a, 2a, 4a and 5a, the segments of this carriage 1 are made out of concrete, where carbon fibres and/or composite materials are used instead of steal and fixing elements are made of reinforces carbon fibre composite materials, too. In this embodiment, three segments A, B, C linked to their respective neighbour via some kind of Groove-spring connections and they are connected by means of two heavy bars FB and RB forming a unit of about 30 t of total weight, where the arrangement of excitation coils 11 and 3D receivers 12 of Figs. 2a, 4a may be used and thus not shown here.

Massive fibre compound rods serve as Lift points LP to attach controlled winches (not shown). The exploded view of Fig. 7b shows details of the internal structure and connection via fixing elements FE. Fig. 7c is an example of a cut through a fixing region of Fig. 7a. Cone shaped structures and corresponding holes ease the assembly. And elongated fixing element FE put into a through-hole has Plastic backplates BP and square nuts SN attached to its ends for fixing.

The system and measuring method described above based on exemplary embodiments permit an effective and reliable measurement, both on land and under water, of a very broad swath in comparison to known systems. In this case, it is possible in a single measurement pass to detect anomalies as an interference masses S while simultaneously being able to localize them exactly and classify them with a high degree of reliability.

### Reference Numeral List

- 1: carriage
- 2: U-shaped or V-shaped frame
- 3: lateral- and reinforcing struts
- 4: sacrificial plate as wear protection
- 5: front region of the carriage 1
- 6: electronics / means for powering and triggering the excitation coils and for processing the response signals
- 7: rear region of the carriage 1
- 8: hatch
- 9: pipe / fitting
- 10: protective pipe for lines
- 11: transmission coil / excitation coil
- 12: 3D sensor / 3D receiver
- 13: towing vehicle
- 14: holding- and traction equipment
- 15: crane jib
- 16: leader weight
- 17: positioning means / taut wire
- 18: segment of a carriage according to the 4^{th} exemplary embodiment
- 19: pin- and plug connection
- 20: moving pin
- A, B, C, D: segments of the carriage 1
- BO: surface over a ground region / ground surface
- S: interference mass / anomaly
- F: tensile force
- Fₕ: horizontal portion of the tensile force F of towing vehicle 13
- BP: Plastic backplate
- CS: cone shaped structure
- FB: heavy front bar
- FE: fixing element
- RB: heavy rear bar
- LP: lift point made of a massive fibre compound rod
- SN: square nut
- x, y, z: spatial axes of a Cartesian coordinate system

## Claims

1. A method for electromagnetic detection, inspection and characterization of a metallic interference mass (S) that lies concealed under a ground surface (BO) and in particular for detecting unexploded ordnance,
using an electromagnetic excitation by means of conductor loops or excitation coils (11), through which pulsed currents flow to excite the metallic interference mass (S), using 3D receivers (12) as sensors for recording response signals to be evaluated afterwards, and
using a carriage (1) composed of electrically nonconductive material as a support moved over the ground surface (BO), **characterized in that** the method further comprises:
disposing the carriage (1) over the ground surface (BO), the carriage (1) supporting the excitation coils (11) situated in at least partially overlapping fashion in the x-y plane of a Cartesian coordinate system and
where one component of each of the 3D receivers (12) is situated in the x-y plane of the excitation coils (11), the carriage (1) also supporting the 3D receivers (12) distributed uniformly at least across their area and/or even partially beyond an area covered by the excitation coils (11),
while moving the carriage (1) in a single pass over an area to be evaluated, triggering the excitation coils (11) serially, recording a decay behaviour of pulse responses of all of the 3D receivers (12) in all three spatial axes (x, y, z) of said Cartesian coordinate system
and using the recordings and the geo-coordinates of the respective position of all of the 3D receivers to detect,
evaluate and characterize the metallic interference mass (S) that lies in the area to be evaluated.

2. The method according to the preceding claim, **characterized in that** the excitation coils (11) are arranged in two rows where the coils (11) in each row do not overlap and these rows are arranged so that they partially overlap.

3. The method according to the preceding claim, **characterized in that** 28 3D receivers (12) and 5 excitation coils (11) are used.

4. The method according to one of the preceding claims, **characterized in that** the carriage (1) is used as a mechanical unit and as a support for means for powering and triggering the excitation coils (11) as well as for means for processing the signals from the 3D receivers (12) together as a unit, where coils are used as 3D receivers (12).

5. The method according to one of the preceding claims, **characterized in that** the carriage (1) is composed of segments (18) through the use of pin- and plug connections (19); in the disassembled state, the segments (18) are loaded into a transport means such as a container, transported, and after unloading, are set up or assembled on site for use.

6. The method according to one of the preceding claims, **characterized in that** on the carriage (1), in addition to holding- and traction equipment (14), positioning means (17) are also provided in order to be able to perform direct satellite-assisted positioning when there is sufficient line of sight and to perform an indirect positioning when there is not sufficient line of sight.

7. The method according to the preceding claim, **characterized in that** on the carriage (1) for the indirect positioning by means of a towing vehicle (13), a taut wire (17) is used, which connects the carriage (1) to the towing vehicle (13).

8. The method according to the preceding claim, **characterized in that** the carriage (1) is used in a wing-like fashion having a well-defined distance (Δh) over the ground surface (BO) or the carriage (1) is used touching the ground surface (BO) in a more or less constant manner, where in a contact region of the carriage (1) with the ground surface (BO), sacrificial plates (4) are used, which are preferably replaced at chronological intervals.

9. A system for electromagnetic inspection of a metallic interference mass (S) that lies concealed under a ground surface (BO) and in particular for detecting unexploded ordnance, **characterized in that** a device is embodied with an essentially U-shaped or V-shaped frame (2) and lateral struts (3) and is embodied for mechanical coupling to a towing vehicle (13) as a carriage (1) configured to be moved over the ground surface (BO), where the carriage (1) is composed of electrically nonconductive material as a support for excitation coils (11) situated in at least partially overlapping fashion in the x-y plane of a Cartesian coordinate system and
the carriage (1) further is a support of a multitude of 3D receivers (12), where one component of each of the 3D receivers (12) is located in the x-y plane of the excitation coils (11),
where said 3D receivers (12) are positioned distributed essentially in the plane of the excitation coils (11) uniformly at least across their area,
where the excitation coils (11) are configured to be serially triggered, all of the 3D receivers (12) are configured to record a decay behavior of pulse responses in all three spatial axes (x, y, z) of said Cartesian coordinate system and where the system is configured to add the geo-coordinates of the respective position of all of the 3D receivers to the recorded pulse responses of all of the 3D receivers (12) to detect, evaluate and characterize the metallic interference mass that lies in an area to be evaluated while the carriage (1) is moved in a single pass over the area.

10. The system according to the preceding claim, **characterized in that** in a front region (5) of the carriage (1) viewed in the movement direction during use, a set of electronics (6) is provided for power supply purposes, data acquisition, or data processing, and in a rear region (7), the excitation coils (11) and the 3D receivers (12) are provided.

11. The system according to one of the two preceding claims, **characterized in that** the frame (2) ends in skids that are oriented parallel to a movement direction and a contact region of the carriage (1) with the ground surface (BO) has replaceable sacrificial plates (4).

12. The system according to one of the three preceding claims, **characterized in that** for a use under water, it further comprises a leader weight (16), the carriage (1) being coupled via electrically nonconductive holding- and traction equipment (14) to the leader weight (16), which is in turn connected to the towing vehicle (13) in order to impart a tensile force, and the towing vehicle (13) is preferably a ship or a towboat.

13. The system according to claim 10, **characterized in that** a hatch (8) is placed over the front region (5) of the carriage (1) to protect the electronics (6) and/or over the rear region (7) to protect the excitation coils (11) and the 3D receivers (12).

14. The system according to the preceding claim, **characterized in that** the hatch (8) has cooling means.

15. The system according to the preceding claim, **characterized in that** the system is configured to be drawn over the surface of the ground under water in the sea, in a lake, or in shallow water zones.

## Patentansprüche

1. Verfahren zur elektromagnetischen Detektion, Inspektion und Charakterisierung einer metallischen Interferenzmasse (S), die unter einer Bodenoberfläche (BO) verborgen liegt, und insbesondere zur Detektion nicht explodierter Kampfmittel, unter Verwendung einer elektromagnetischen Anregung mittels Leiterschleifen oder Erregerspulen (11), durch die gepulste Ströme fließen, um die metallische Interferenzmasse (S) anzuregen,
die Verwendung von 3D-Empfängern (12) als Sensoren zur Aufzeichnung von Antwort-Signalen, die anschließend ausgewertet werden sollen, und
unter Verwendung eines Schlittens (1) aus elektrisch nicht leitendem Material als Träger, der über die Bodenoberfläche (BO) bewegt wird,
**dadurch gekennzeichnet, dass** die Methode ferner umfasst:
Anordnen des Schlittens (1) über der Bodenoberfläche (BO), wobei der Schlitten (1) die Erregerspulen (11) trägt, die in der x-y-Ebene eines kartesischen Koordinatensystems zumindest teilweise überlappend angeordnet sind, und
wobei eine Komponente jedes der 3D-Empfänger (12) in der x-y-Ebene der Anregungsspulen (11) angeordnet ist,
wobei der Schlitten (1) auch die 3D-Empfänger (12) trägt, die gleichmäßig zumindest über ihre Fläche und/oder sogar teilweise über einen von den Anregungsspulen (11) abgedeckten Bereich hinaus verteilt sind,
die Anregungsspulen (11) seriell getriggert werden, während der Schlitten (1) in einem einzigen Durchgang über einen auszuwertenden Bereich bewegt wird, ein Abklingverhalten von Impuls-Antworten aller 3D-Empfänger (12) in allen drei Raumachsen (x, y, z) des kartesischen Koordinatensystems aufgezeichnet wird
und anhand der Aufzeichnungen und der Geokoordinaten der jeweiligen Position aller 3D-Empfänger die metallische Interferenzmasse (S), die in dem auszuwertenden Gebiet liegt, zu detektieren, auszuwerten und zu charakterisieren.

2. Verfahren nach dem vorhergehenden Anspruch, **dadurch gekennzeichnet, dass** die Erregerspulen (11) in zwei Reihen angeordnet sind, wobei sich die Spulen (11) in jeder Reihe nicht überlappen und diese Reihen so angeordnet sind, dass sie sich teilweise überlappen.

3. Verfahren nach dem vorhergehenden Anspruch, **dadurch gekennzeichnet, dass** 28 3D-Empfänger (12) und 5 Anregungsspulen (11) verwendet werden.

4. Verfahren nach einem der vorhergehenden Ansprüche, **dadurch gekennzeichnet, dass** der Schlitten (1) als mechanische Einheit und als Träger für Mittel zum Antreiben und Triggern der Erregerspulen (11) sowie für Mittel zum gemeinsamen Verarbeiten der Signale von den 3D-Empfängern (12) als Einheit verwendet wird, wobei die Spulen als 3D-Empfänger (12) verwendet werden.

5. Verfahren nach einem der vorhergehenden Ansprüche, **dadurch gekennzeichnet, dass** der Schlitten (1) durch die Verwendung von Stift- und Steckverbindungen (19) aus Segmenten (18) zusammengesetzt ist; im zerlegten Zustand werden die Segmente (18) in ein Transportmittel wie einen Container geladen, transportiert und nach dem Entladen vor Ort zur Verwendung aufgestellt oder zusammengebaut.

6. Verfahren nach einem der vorstehenden Ansprüche, **dadurch gekennzeichnet, dass** auf dem Schlitten (1) neben Halte- und Zugmitteln (14) auch Positionierungsmittel (17) vorgesehen sind, um bei ausreichender Sichtverbindung eine direkte satellitengestützte Ortung und bei nicht ausreichender Sichtverbindung eine indirekte Ortung durchführen zu können.

7. Verfahren nach dem vorstehenden Anspruch, **dadurch gekennzeichnet, dass** auf dem Schlitten (1) für die indirekte Positionierung mittels eines Zugfahrzeugs (13) ein taut wire (17) verwendet wird, der den Schlitten (1) mit dem Zugfahrzeug (13) verbindet.

8. Verfahren nach dem vorhergehenden Anspruch, **dadurch gekennzeichnet, dass** der Schlitten (1) flügelartig mit einem definierten Abstand (Δh) über der Bodenoberfläche (BO) eingesetzt wird oder der Schlitten (1) die Bodenoberfläche (BO) in einem mehr oder weniger konstanten Abstand berührt, wobei in einem Kontaktbereich des Schlittens (1) mit der Bodenoberfläche (BO) Opferplatten (4) verwendet werden, die vorzugsweise in regelmäßigen zeitlichen Abständen ersetzt werden.

9. System zur elektromagnetischen Untersuchung einer metallischen Interferenzmasse (S), die unter einer Bodenoberfläche (BO) verborgen liegt, und insbesondere zur Detektion von Blindgängern, **dadurch gekennzeichnet, dass**
eine Vorrichtung mit einem im Wesentlichen U-förmigen oder V-förmigen Rahmen (2) und Querstreben (3) ausgeführt ist und zur mechanischen Kopplung mit einem Zugfahrzeug (13) als Schlitten (1) ausgeführt ist, der so konfiguriert ist, dass er über die Bodenoberfläche (BO) bewegt werden kann, wobei der Schlitten (1) aus elektrisch nichtleitendem Material als Träger für Erregerspulen (11) besteht, die zumindest teilweise überlappend in der x-y-Ebene eines kartesischen Koordinatensystems angeordnet sind, und
der Schlitten (1) ferner eine Halterung für eine Vielzahl von 3D-Empfängern (12) ist, wobei eine Komponente jedes der 3D-Empfänger (12) in der x-y-Ebene der Auslösespulen (11) angeordnet ist,
wobei die 3D-Empfänger (12) im Wesentlichen einheitlich in der Ebene der Anregungsspulen (11) verteilt angeordnet sind,
wobei die Anregungsspulen (11) so konfiguriert sind, dass sie seriell angesteuert werden, alle 3D-Empfänger (12) so konfiguriert sind, dass sie ein Abklingverhalten von Impulsantworten in allen drei Raumachsen (x, y, z) des Koordinatensystems aufnehmen, und wobei das System so konfiguriert ist, dass es Geokoordinaten der jeweiligen Position aller 3D-Empfänger hinzufügt, um die metallische Interferenzmasse (S) zu detektieren, auszuwerten und zu charakterisieren, die in dem auszuwertenden Bereich liegt, während der Schlitten (1) in einem einzigen Durchgang über den Bereich bewegt wird.

10. System nach dem vorstehenden Anspruch, **dadurch gekennzeichnet, dass** in einem in Bewegungsrichtung während der Benutzung gesehen vorderen Bereich (5) des Schlittens (1) ein Satz Elektronik (6) zur Stromversorgung, Datenerfassung oder Datenverarbeitung und in einem hinteren Bereich (7) die Anregungsspulen (11) und die 3D-Empfänger (12) vorgesehen sind.

11. System nach einem der beiden vorhergehenden Ansprüche,
**dadurch gekennzeichnet, dass** der Rahmen (2) in Kufen ausläuft, die parallel zu einer Bewegungsrichtung ausgerichtet sind und dass ein Kontaktbereich des Schlittens (1) mit der Bodenfläche (BO) austauschbare Opferplatten (4) aufweist.

12. System nach einem der drei vorhergehenden Ansprüche,
**dadurch gekennzeichnet, dass** es für einen Einsatz unter Wasser ferner ein Vorlaufgewicht (16) umfasst, wobei der Schlitten (1) über eine elektrisch nicht leitende Halte- und Zugvorrichtung (14) mit dem Vorlaufgewicht (16) gekoppelt ist, das seinerseits mit dem Zugfahrzeug (13) verbunden ist, um eine Zugkraft zu übertragen, und das Zugfahrzeug (13) vorzugsweise ein Schiff oder ein Schleppboot ist.

13. System nach Anspruch 10, **dadurch gekennzeichnet, dass** eine Haube (8) über dem vorderen Bereich (5) des Schlittens (1) zum Schutz der Elektronik (6) und/oder über dem hinteren Bereich (7) zum Schutz der Erregerspulen (11) und der 3D-Empfänger (12) angeordnet ist.

14. System nach dem vorstehenden Anspruch, **dadurch gekennzeichnet, dass** die Haube (8) Mittel zum Kühlen aufweist.

15. System nach dem vorhergehenden Anspruch, **dadurch gekennzeichnet, dass** das System so konfiguriert ist, dass es über die Oberfläche des Bodens unter Wasser im Meer, in einem See oder in Flachwasserzonen gezogen werden kann.

## Revendications

1. Méthode de détection électromagnétique, d'inspection et de caractérisation d'une masse d'interférence métallique (S) dissimulée sous une surface de sol (BO), et en particulier pour la détection de munitions non explosées,
en utilisant une excitation électromagnétique au moyen de boucles conductrices ou de bobines d'excitation (11), dans lesquelles circulent des courants pulsés pour exciter la masse métallique d'interférence (S),
en utilisant des récepteurs 3D (12) comme capteurs pour enregistrer les signaux de réponse à évaluer par la suite, et
en utilisant un chariot (1) composé d'un matériau non conducteur de l'électricité comme support déplacé sur la surface du sol (BO),
**caractérisé en ce que** la méthode comprend en outre:
disposer le chariot (1) sur la surface du sol (BO), le chariot (1) supportant les bobines d'excitation (11) situées de manière à se chevaucher au moins partiellement dans le plan x-y d'un système de coordonnées cartésiennes et
où un composant de chacun des récepteurs 3D (12) est situé dans le plan x-y des bobines d'excitation (11),
le chariot (1) supportant également les récepteurs 3D (12) répartis uniformément au moins sur leur zone et/ou même partiellement au-delà d'une zone couverte par les bobines d'excitation (11),
en déplaçant le chariot (1) en une seule passe sur une zone à évaluer, en déclenchant les bobines d'excitation (11) en série, en enregistrant un comportement de décroissance des réponses d'impulsion de tous les récepteurs 3D (12) dans les trois axes spatiaux (x, y, z) dudit système de coordonnées cartésiennes
et en utilisant les enregistrements et les coordonnées géographiques de la position respective de tous les récepteurs 3D pour détecter, évaluer et caractériser la masse d'interférence métallique (S) qui se trouve dans la zone à évaluer.

2. La méthode selon la revendication précédente, **caractérisée en ce que** les bobines d'excitation (11) sont disposées en deux rangées où les bobines (11) de chaque rangée ne se chevauchent pas et ces rangées sont disposées de manière à se chevaucher partiellement.

3. La méthode selon la revendication précédente, **caractérisée en ce que** 28 récepteurs 3D (12) et 5 bobines d'excitation (11) sont utilisés.

4. Le procédé selon l'une des revendications précédentes, **caractérisé en ce que** le chariot (1) est utilisé comme une unité mécanique et comme un support pour les moyens d'alimentation et de déclenchement des bobines d'excitation (11) ainsi que pour les moyens de traitement des signaux des récepteurs 3D (12) ensemble comme une unité, où les bobines sont utilisées comme récepteurs 3D (12).

5. La méthode selon l'une des revendications précédentes, **caractérisée en ce que** le chariot (1) est composé de segments (18) grâce à l'utilisation de connexions à broches et à fiches (19); à l'état démonté, les segments (18) sont chargés dans un moyen de transport tel qu'un conteneur, transportés, et après déchargement, sont mis en place ou assemblés sur place pour être utilisés.

6. Méthode selon l'une des revendications précédentes, **caractérisée en ce que** sur le chariot (1), outre les équipements de maintien et de traction (14), des moyens de positionnement (17) sont également prévus pour pouvoir effectuer un positionnement direct assisté par satellite lorsqu'il y a une ligne de visée suffisante et pour effectuer un positionnement indirect lorsqu'il n'y a pas de ligne de visée suffisante.

7. La méthode selon la revendication précédente, **caractérisée en ce que** sur le chariot (1) pour le positionnement indirect au moyen d'un véhicule tracteur (13), un fil tendu (17) est utilisé, qui relie le chariot (1) au véhicule tracteur (13).

8. La méthode selon la revendication précédente, **caractérisée en ce que** le chariot (1) est utilisé en forme d'aile avec une distance bien définie (Δh) sur la surface du sol (BO) ou le chariot (1) est utilisé en touchant la surface du sol (BO) d'une manière plus ou moins constante, où dans une zone de contact du chariot (1) avec la surface du sol (BO), des plaques sacrificielles (4) sont utilisées, qui sont de préférence remplacées à des intervalles chronologiques.

9. Système pour l'inspection électromagnétique d'une masse d'interférence métallique (S) qui se trouve cachée sous une surface de sol (BO) et en particulier pour la détection de munitions non explosées, **caractérisé en ce que** un dispositif est constitué d'un cadre (2) essentiellement en forme de U ou de V et de montants latéraux (3) et est conçu pour être accouplé mécaniquement à un véhicule tracteur (13) sous la forme d'un chariot (1) configuré pour se déplacer sur la surface du sol (BO),
où le chariot (1) est composé d'un matériau électriquement non conducteur comme support pour des bobines d'excitation (11) situées de manière à se chevaucher au moins partiellement dans le plan x-y d'un système de coordonnées cartésiennes et
le chariot (1) est en outre un support d'une multitude de récepteurs 3D (12), où un composant de chacun des récepteurs 3D (12) est situé dans le plan x-y des bobines d'excitation (11),
où lesdits récepteurs 3D (12) sont positionnés répartis essentiellement dans le plan des bobines d'excitation (11) de manière uniforme au moins dans leur région,
où les bobines d'excitation (11) sont configurées pour être déclenchées en série, tous les récepteurs 3D (12) sont configurés pour enregistrer un comportement de décroissance des réponses d'impulsion dans les trois axes spatiaux (x, y, z) dudit système de coordonnées et où le système est configuré pour ajouter des géo-coordonnées de la position respective de tous les récepteurs 3D pour détecter, évaluer et caractériser la masse d'interférence métallique (S) qui se trouve dans la zone à évaluer alors que le chariot (1) est déplacé en un seul passage sur la zone.

10. Le système selon la revendication précédente, **caractérisé en ce que** dans une zone avant (5) du chariot (1), vue dans le sens du mouvement pendant l'utilisation, un ensemble d'électronique (6) est prévu pour l'alimentation électrique, l'acquisition de données ou le traitement de données, et dans une zone arrière (7) les bobines d'excitation (11) et les récepteurs 3D (12) sont prévus.

11. Le système selon l'une des deux revendications précédentes, **caractérisé en ce que** le cadre (2) se termine par des patins qui sont orientés parallèlement à une direction de mouvement et une zone de contact du chariot (1) avec la surface du sol (BO) comporte des plaques sacrificielles remplaçables (4).

12. Le système selon l'une des trois revendications précédentes, **caractérisé en ce que** pour une utilisation sous l'eau, il comprend en outre un poids de tête (16), le chariot (1) étant couplé par l'intermédiaire d'un équipement de maintien et de traction (14) non conducteur de l'électricité au poids de tête (16), qui est à son tour relié au véhicule de remorquage (13) afin de communiquer une force de traction, et le véhicule de remorquage (13) est de préférence un navire ou un bateau remorqueur.

13. Système selon la revendication 10, **caractérisé en ce qu'**un couvercle de protection (8) est placé au-dessus de la zone avant (5) du chariot (1) pour protéger l'électronique (6) et/ou au-dessus de la zone arrière (7) pour protéger les bobines d'excitation (11) et les récepteurs 3D (12).

14. Le système selon la revendication précédente, **caractérisé en ce que** le couvercle de protection (8) possède des moyens de refroidissement.

15. Le système selon la revendication précédente, **caractérisé en ce que** le système est configuré pour être dessiné sur la surface du sol sous l'eau dans la mer, dans un lac ou dans des zones d'eau peu profonde.
